# EUROPÄISCHE PATENTANMELDUNG

(11) **EP 1 234 926 A1**
(43) Veröffentlichungstag der Anmeldung: **28.08.2002**
(21) Anmeldenummer: 01104104.3
(22) Anmeldetag: 21.02.2001
(51) Int. Cl.: E04D 3/35, H01L 31/048

(54) **Wärmedämmendes Metallblechpaneel mit Photovoltaik-Element für eine Dacheindeckung oder Wandverkleidung**

(71) Anmelder: Thyssen Bausysteme GmbH, 46535 Dinslaken (DE)
(72) Erfinder: Dörr, Karl-Werner, Dipl.-Ing., 46399 Bocholt (DE); Finger, Ullrich, Dipl.-Kfm., 40885 Ratingen (DE)
(74) Vertreter: Cohausz & Florack

(57) **Zusammenfassung**

Die Erfindung betrifft ein Metallblechpaneel für eine Dacheindeckung oder Wandverkleidung mit zwei Deckblechen (1, 2) und einer Zwischenschicht (11) aus wärmedämmendem Material. Auf dem die Außenseite bildenden Deckblech (2) dieser Paneele ist ein mit elektrischen Anschlußleitungen (21, 22) versehenes flächiges Photovoltaikelement (17, 18) aufgebracht, das als ein rückseitig mit einem kaltklebenden Kleber (19, 20) versehenes, flexibles Laminat ausgebildet ist und dessen elektrische Anschlußleitungen (21, 22) durch im Metallblechpaneel vorgesehene, hinsichtlich der bauphysikalischen Anforderungen abgedichtete Bohrungen (23) geführt sind.

Für die Zusammenfassung ist die einzige Figur bestimmt.

## Beschreibung

Die Erfindung betrifft ein Metallblechpaneel für eine Dacheindeckung oder Wandverkleidung mit zwei Deckblechen und einer Zwischenschicht aus wärmedämmendem Material.

Metallblechpaneele dieser Art sind aus der Praxis bekannt. Sie dienen als Gebäudeabschlußelemente mit gleichzeitiger Wärmedämmung.

Aus der Praxis sind aber auch Metallblechprofile ohne zusätzliche Wärmedämmung bekannt, auf deren Außenseite ein flächiges Photovoltaik-Element mit einem Heißkleber aufgeklebt ist. Das Photovoltaik-Element ist aus mehreren übereinander angeordneten Solarzellen aus amorphen Silizium aufgebaut, die ihrerseits auf einer flexiblen Trägerfolie aus Edelstahl aufgebracht und durch eine schützende Kunststofffolie abgedeckt sind.

Die Herstellung eines solchen Metallblechprofils erfolgt in der Weise, dass auf das flach liegende, mit Löchern - für später an rückseitige, elektrische Kontakte des Photovoltaik-Elementes anzuschließende Leitungen - versehene Metallblechprofil das Photovoltaik-Element und als Zwischenlage der Heißkleber in Folienform aufgelegt werden und dann der Heißkleber durch über das Metallblechprofil eingebrachte Wärme erweicht wird, wobei die oben genannten drei Lagen mit Druck beaufschlagt werden. Nach Erkalten des Heißklebers ist das Photovoltaik-Element flächig mit dem Metallblechprofil verbunden.

Die Herstellung eines solchen Metallblechprofils mit darauf durch den Heißkleber befestigten Photovoltaik-Elementen ist wegen des Zusammenfügens und der Druckbeaufschlagung dieser flach aufeinander liegenden drei Lagen während der Wärmezufuhr über das Metallblech aufwendig. Insbesondere ist die Herstellung einer von Lufteinschlüssen freien Verbindung des Metallprofils mit dem Photovoltaik-Element schwierig.

Ein solcher Aufbau aus einem Metallblechprofil mit darauf durch Heißkleber befestigtem Photovoltaik-Element ist für wärmedämmende Metallblechpaneele der eingangs genannten Art nicht geeignet, weil es nicht möglich ist, über das wärmedämmende Material der Zwischenschicht das die Außenseite bildende Deckblech, mit dem das Photovoltaik-Element verbunden werden muß, auf eine für den Klebeprozeß ausreichend hohe Temperatur von in der Regel ca. 120°C zu erwärmen, ohne dabei das wärmedämmende Material zu zerstören.

Der Erfindung liegt die Aufgabe zugrunde, ein Metallblechpaneel der eingangs genannten Art zu schaffen, das mit einem Photovoltaik-Element versehen ist.

Diese Aufgabe wird erfindungsgemäß dadurch gelöst, daß auf dem die Außenseite bildenden Deckblech ein mit elektrischen Anschlussleitungen versehenes, flächiges Photovoltaik-Element aufgebracht ist, das als ein rückseitig mit einem kaltklebenden Kleber versehenes, flexibles Laminat ausgebildet ist und dessen elektrische Anschlussleitungen durch im Metallblechpaneel vorgesehene, hinsichtlich der bauphysikalischen Anforderungen abgedichtete Bohrungen geführt sind.

Vorzugsweise besteht das Photovoltaik-Element aus amorphen Siliziumzellen. Als Kleber eignet sich z.B. eine bituminöse Schicht. Die Bohrungen mit den hier durchgeführten Anschlussleitungen sind vorzugsweise mit einem wärmedämmenden, brandschutztechnisch optimierten Material verfüllt. Außerdem müssen die Bohrungen im die Unterseite bildenden Deckblech mit einem als Dampfsperre wirkenden Abschluß versehen sein.

Im folgenden wird die Erfindung anhand einer ein Ausführungsbeispiel darstellenden Zeichnung näher erläutert, die im Querschnitt ein Metallblechpaneel mit zwei aufgebrachten Photovoltaik-Elementen und einen Teil von einem angeschlossenen benachbarten Metallblechpaneel zeigt.

Jedes Metallblechpaneel P, P* besteht aus einem bei einer Dacheindeckung oder Wandverkleidung innen liegenden Deckblech 1 und einem außen liegenden Deckblech 2, das vorzugsweise durch trapezförmige Profilierungen 3, 4, 5 breite Sicken 6, 7 bildet. Die beiden Deckbleche 1, 2 bilden zwischen sich einen Hohlraum 8, der seitlich durch Abschlußstreifen 9, 10 verschlossen und mit einer Zwischenschicht 11 aus einem wärmedämmenden Material, z. B. Polyurethane, Polystyrol, Mineralfaser etc., ausgefüllt ist. Die Längsränder 12, 13, 14, 15 der Deckbleche 1, 2 sind derart unterschiedlich profiliert, dass benachbarte Metallblechpaneele P, P* teilweise einander überlappen und nach Art einer Nut-Feder-Verbindung formschlüssig ineinander greifen. Zwischen den benachbarten Metallblechpaneelen P, P* ist ein Dichtband 16 eingesetzt.

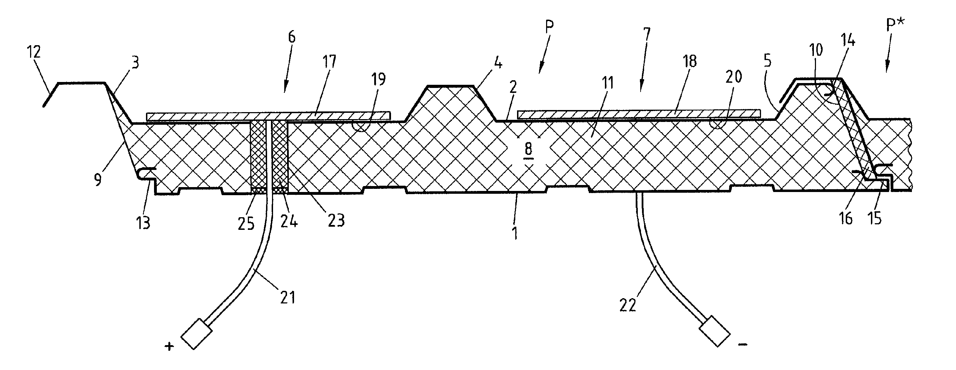

Im Bereich der Sicken 6, 7 sind Photovoltaik-Elemente 17, 18 mittels eines rückseitig aufgebrachten, kaltklebenden Klebers 19, 20 gehalten. Jedes Photovoltaik-Element 17, 18 hat zwei nach außen führende Anschlußleitungen 21, 22, von denen in der Zeichnung für jedes Photovoltaik-Element 17, 18 nur eine dargestellt ist. Zur Durchführung dieser Anschlußleitungen 21, 22 durch das Metallblechpaneel sind Bohrungen 23 vorgesehen, die zusätzlich zu den hindurchgeführten Anschlußleitungen 21 mit einem wärmedämmenden, brandschutztechnisch optimierten Füllmaterial 25 verfüllt sind. Nach außen sind die Bohrungen 23 mit einem als Dampfsperre wirkenden Abschluß 26 abgedeckt.

Die elektrisch miteinander verschalteten Bausteine eines jeden Photovoltaik-Elementes 17, 18 bestehen aus mehreren übereinander angeordneten amorphen Siliziumzellen, die außenseitig durch eine schützende Kunststoffschicht abgedeckt sind und somit ein flexibles Laminat bilden. Dieses Laminat ist rückseitig mit dem kaltklebenden Kleber 19, 20, insbesondere einem Kleber auf Bitumenbasis, versehen. Dem Hersteller der Metallblechpaneele wird dieses Laminat in Form von Bahnen geliefert, wobei die selbstklebende Bitumenschicht durch ein leicht abziehbares Trennpapier abgedeckt ist. Der Hersteller der Metallblechpaneele bringt dann an die elektrischen Anschlüsse der Photovoltaik-Elemente 17, 18 die Anschlussleitungen 21, 22 an, damit er beim Aufrollen des Laminates auf das Metallblechpaneel P die Anschlussleitungen 21, 22 durch die Bohrungen 23 hindurchführen kann. Abschließend werden die Bohrungen mit wärmedämmenden, brandschutztechnisch optimiertem Material 25 verfüllt und die Abschlüsse 26 hergestellt.

## Patentansprüche

1. Metallblechpaneel(P, P*) für eine Dacheindeckung oder Wandverkleidung mit zwei Deckblechen (1, 2) und einer Zwischenschicht (11) aus wärmedämmendem Material,
**dadurch gekennzeichnet, daß**
auf dem die Außenseite bildenden Deckblech (2) ein mit elektrischen Anschlussleitungen (21, 22)versehenes, flächiges Photovoltaik-Element (17, 18) aufgebracht ist, das als ein rückseitig mit einem kaltklebenden Kleber (19, 20) versehenes, flexibles Laminat ausgebildet ist und dessen elektrische Anschlussleitungen (21, 22) durch im Metallblechpaneel (P, P*) vorgesehene, hinsichtlich der bauphysikalischen Anforderungen abgedichtete Bohrungen (23) geführt sind.

2. Metallblechpaneel nach Anspruch 1,
**dadurch gekennzeichnet, daß**
das Photovoltaik-Element (17, 18) aus amorphen Siliziumzellen aufgebaut ist

3. Metallblechpaneel nach Anspruch 1 oder 2,
**dadurch gekennzeichnet, daß**
der Kleber (19, 20) eine Schicht aus bituminösem Material ist.

4. Metallblechpaneel nach einem der Ansprüche 1 bis 3,
**dadurch gekennzeichnet, daß** die Bohrungen (23) im die Unterseite bildenden Deckblech (1) mit einem als Dampfsperre wirkenden Abschluss (26) versehen sind.
